# EUROPÄISCHE PATENTSCHRIFT

(11) **EP 2 275 701 B1**
(45) Veröffentlichungstag und Bekanntmachung des Hinweises auf die Patenterteilung: **16.01.2013**
(21) Anmeldenummer: 10005231.5
(22) Anmeldetag: 19.05.2010
(51) Int. Cl.: F16D 27/112

(54) **Elektromagnetische Reibschaltkupplung**
Electromagnetic friction coupling
Embrayage à friction électromagnétique

(30) Priorität: 13.07.2009 DE 102009033178
(43) Veröffentlichungstag der Anmeldung: 19.01.2011
(73) Patentinhaber: LICOS Trucktec GmbH, 88677 Markdorf (DE)
(72) Erfinder: Krafft, Rainer Dr., 88633 Heiligenberg (DE)
(74) Vertreter: Otten, Roth, Dobler & Partner

(56) Entgegenhaltungen:
- EP-A2- 1 353 051
- FR-A1- 2 559 222
- JP-A- 2009 121 676
- US-A1- 2003 192 763

## Beschreibung

Die Erfindung betrifft eine Reibschaltkupplung nach dem Oberbegriff des Anspruchs 1.

### Stand der Technik:

Elektromagnetische Reibschaltkupplungen werden im Bereich des Fahrzeugbaus zum schaltbaren Antrieb von Hilfsaggregaten wie Lüftern und Kühlmittelpumpen, die mechanische Leistung vom Motor abnehmen, eingesetzt. Dabei sind verschiedenste Konstruktionen bekannt, darunter auch solche, in denen eine elektromagnetische Reibschaltkupplung mit einem Wirbelstromantrieb kombiniert wird. Ein Wirbelstromantrieb wird beispielsweise dann ergänzt, wenn der Stillstand eines Hilfsaggregats unerwünscht ist bzw. wenn zum energiesparenden Betrieb eine Drehbewegung mit geringerer Drehzahl übertragen werden soll. Bekannte Reibschaltkupplungen, die mit einem Wirbelstromantrieb ausgestattet sind, weisen jedoch zahlreiche zusätzliche Bauteile auf und erfordern aufgrund ihrer anspruchsvollen Konstruktion oft einen deutlich erhöhten Herstellungsaufwand.

Eine solche Kupplung ist aus EP 1 353 051 bekannt.

### Aufgabe und Vorteile der Erfindung:

Die Aufgabe der Erfindung besteht darin, eine elektromagnetische Reibschaltkupplung mit Wirbelstromantrieb bereitzustellen, die eine vergleichsweise einfachere und kostengünstigere Herstellung erlaubt und eine raumsparende Bauform aufweist.

Diese Aufgabe wird durch eine elektromagnetische Reibschaltkupplung mit den Merkmalen des Anspruchs 1 gelöst. In den abhängigen Ansprüchen sind zweckmäßige und vorteilhafte Ausgestaltungen der Erfindung aufgezeigt.

Die Erfindung geht dabei von einer elektromagnetischen Reibschaltkupplung aus, die einen Rotor, ein weiteres Kupplungselement, das eine mit dem Rotor gemeinsame Drehachse umläuft und bezüglich des Rotors drehbar gelagert ist, sowie Elemente zur Übertragung einer Drehbewegung nach dem Prinzip einer Wirbelstromkupplung umfasst. Der Kern der Erfindung besteht darin, dass mit dem Rotor ein oder mehrere Magnetelemente drehfest verbunden sind, die ein mit dem weiteren Kupplungselement drehfest verbundenes Wirbelstromelement umlaufen. Insbesondere werden die Magnetelemente derart angebracht, dass sie das Wirbelstromelement im ausgekuppelten Zustand über einen bandförmigen axialen Abschnitt der Kupplungsdrehachse umlaufen. Vorzugsweise erstreckt sich das Wirbelstromelement weiter innen insbesondere mit zumindest gleicher Bandbreite.

Die Magnetelemente sind vorzugsweise derart angebracht, dass sich entlang eines Kreisumfangs an der Außenseite des Wirbelstromelements magnetische Felder in unterschiedlicher Stärke bzw. Orientierung bezüglich der entsprechenden radialen Richtungen ergeben. Z. B. ist eine Polfläche jedes Magnetelements auf das Wirbelstromelement gerichtet. Zwischen den Polflächen der Magnetelemente und der äußeren Mantelfläche des Wirbelstromelements sollte ein Zwischenraum verbleiben, um Berührungen zu vermeiden. Somit stehen alle Seiten der Magnetelemente, die nicht auf das Wirbelstromelement gerichtet sind, insbesondere die radial nach außen gerichtete Seite, für ihre Befestigung zur Verfügung. Dies bietet den Vorteil, dass Verbindungen der Magnetelemente mit dem Rotor insbesondere an ihrer radial nach außen gerichteten Seite selbsthelfend ausgebildet sein können. Ein weiterer Vorteil ergibt sich daraus, dass durch die Länge der Magnetelemente und des Wirbelstromelements entlang der Kupplungsdrehachse das durch den Wirbelstromantrieb übertragbare Drehmoment an einen vorgegebenen Wert angepasst werden kann. Dabei liegt ein weiterer Vorteil darin, dass eine entsprechende Anpassung unabhängig von der Größe der verfügbaren Reibfläche oder des Durchmessers des weiteren Kupplungselements erfolgen kann.

In einer weiteren erfindungsgemäßen vorteilhaften Kupplung erfüllt der Rotor verschiedene Aufgaben, beispielsweise hinsichtlich der Bündelung und Führung des magnetischen Flusses zur Anziehung einer Ankerscheibe bzw. hinsichtlich der Verbindung mit einem Antriebselement. Er stellt ein zentrales und vergleichsweise großes Bauteil der Kupplung dar. Daher bietet die drehstarre Verbindung der Magnetelemente mit dem Rotor den Vorteil, dass derartige Verbindungen mit dem Rotor einen vergleichsweise geringen konstruktiven und herstellungstechnischen Mehraufwand erfordern.

Ferromagnetische und insbesondere hartmagnetische Werkstoffe, wie sie in den Magnetelementen enthalten sind, weisen wegen der darin enthaltenen schweren metallischen Elemente, z. B. Eisen, Kobalt bzw. Nickel, eine hohe Dichte auf. Daher treten mit der Drehbewegung der Magnetelemente, insbesondere bei Änderung der Drehzahl, vergleichsweise starke Trägheitskräfte auf. Insbesondere wenn die erfindungsgemäße Kupplung so betrieben wird, dass der Rotor die Antriebsseite der Kupplung bildet, werden diese Trägheitskräfte unmittelbar vom Antrieb der Kupplung überwunden. Dadurch ist die Abtriebsseite vorteilhaft von den genannten Trägheitskräften entlastet und kann beim Einkuppeln schneller die Drehzahl der Antriebsseite erreichen. Zudem ergeben sich die Vorteile, dass der Vorgang des Einkuppelns weniger mechanische Energie verbraucht und weniger Verschleiß, insbesondere an den Reibflächen, erzeugt.

Vorzugsweise wird die Erfindung so ausgeführt, dass die Magnetelemente der Wirbelstromkupplung an einer oder mehreren axialen Verlängerungen des Rotors angebracht sind. Dabei kann eine axiale Verlängerung der Verbindung beispielsweise aller Magnetelemente mit dem Rotor dienen oder beispielsweise jedes Magnetelement bzw. insbesondere ein Paar benachbarter Magnetelemente jeweils durch eine eigene axiale Verlängerung mit dem Rotor verbunden sein. Ein oder mehrere axiale Verlängerungen können lösbar, zum Beispiel durch Anschrauben, oder nicht lösbar, zum Beispiel durch Anschweißen, angebracht sein oder werden aus einer Rohform durch Verformung und/oder abtragende Bearbeitung, z. B. Fräsen, ausgebildet. Dies bietet den Vorteil, dass die Ausbildung axialer Verlängerungen optimal auf die Herstellung des Rotors abgestimmt werden kann.

Besonders bevorzugt ist es, die axiale Verlängerung des Rotors konzentrisch zur Kupplungsdrehachse rohrförmig auszubilden. Dies bietet den Vorteil, dass die Magnetelemente insbesondere an der Innenseite der Rohrwand z. B. durch Kleben oder Klemmen befestigt werden können. Dadurch werden die Magnetelemente von der Rohrwand ringförmig umgeben, sodass die Rohrwand vorteilhaft alle Trägheitskräfte, die im Zuge der Bewegung der Magnetelemente entstehen, überwiegend selbsthelfend aufnehmen kann. Eine rohrförmige Verlängerung stellt eine vergleichsweise einfache und günstig an die Form des Rotors angepasste Bauform dar, die mit vorteilhaft wenig Aufwand am Rotor, z. B. durch Reibschweißen, maschinelles Drehen oder Anformen anbringen lässt.

Eine weitere zweckmäßige Ausführung der Erfindung besteht darin, dass die Magnetelemente der Wirbelstromkupplung an einem Antriebselement, das konzentrisch zur Kupplungsdrehachse am Rotor befestigt ist, angebracht sind. Ein solches Antriebselement kann beispielsweise ein Radkranz für einen Riemenantrieb sein. Insbesondere wenn das Antriebselement derart am Rotor angebracht ist, dass es den Rotor konzentrisch umgibt, bietet es Befestigungsmöglichkeiten in größerem Abstand zur Kupplungsdrehachse. Dabei ergibt sich der Vorteil eines vereinfachten Zusammenbaus der Kupplung, weil die Magnetelemente zusammen mit dem Antriebselement am Rotor angebracht werden können.

Eine besonders bevorzugte Ausbildung der Erfindung besteht darin, dass der Rotor, eine axiale Verlängerung des Rotors, an dem die Magnetelemente angebracht sind, und ein Antriebselement ein einstückiges Bauteil bilden. Somit werden mehrere Bauteile und ihre Funktionen günstigerweise in einem einzigen Bauteil zusammengefasst, das sich am Stück einfacher und schneller herstellen lässt. Dabei ist es insbesondere günstig, dass die magnetischen Eigenschaften des Rotorwerkstoffs auch die Wirkung des von den Magnetelementen erzeugten magnetischen Flusses beim Wirbelstromantrieb unterstützen.

In einer zweckmäßigen Ausführung der Erfindung ist das Wirbelstromelement einstückig ausgebildet. Beispielsweise wird darauf verzichtet, einen magnetischen Rückschlussring zur Erhöhung der induzierten Wirbelströme in dem Wirbelstromelement unterzubringen. Dies ist insbesondere dann vorteilhaft, wenn der Wirbelstromantrieb im Wesentlichen dazu dient, einen Stillstand des von der Kupplung angetriebenen Hilfsaggregats durch Übertragung eines vergleichsweise geringen Drehmoments zu verhindern. Ebenso können Kühlelemente vorteilhaft am Wirbelstromelement angeformt sein, wodurch die separate Anbringung von Kühlelementen vermieden wird.

Eine zweckmäßige Ausführung der Erfindung besteht darin, dass das Wirbelstromelement ein separates Bauteil zur Anbringung an einer gemeinsamen Drehwelle drehfest mit dem weiteren Kupplungselement ist. Hierbei ist das Wirbelstromelement an einer axialen Position der Kupplungsdrehachse befestigt, die von der axialen Position des weiteren Kupplungselements unabhängig ist. Insbesondere, wenn das weitere Kupplungselement, beispielsweise eine Ankerscheibe, axial beweglich ist, bietet dies den Vorteil, dass das Wirbelstromelement seine axiale Position bezüglich der Magnetelemente immer beibehalten kann. Weiterhin wird die axiale Beweglichkeit des weiteren Kupplungselements günstigerweise nicht durch die Trägheitskräfte des Wirbelstromelements herabgesetzt.

Bei einer weiteren zweckmäßigen Ausführung der Erfindung wird das Wirbelstromelement an dem weiteren Kupplungselement befestigt. Durch die Anbringung am weiteren Kupplungselement, z. B. einer Reibscheibe, ist das Wirbelstromelement mit diesem drehfest verbunden und erfindungsgemäß gegenüber dem Rotor drehbar gelagert. Weil dadurch an einer Drehwelle kein zusätzlicher Abschnitt zur Anbringung des Wirbelstromelements benötigt wird, kann die Drehwelle und damit die Ausdehnung der Kupplung in Richtung der Kupplungsdrehachse entsprechend kürzer ausgelegt sein.

Vorzugsweise ist das weitere Kupplungselement ein Reibflächenelement. Das Reibflächenelement ist nur im eingekuppelten Zustand über seine Reibflächen drehfest mit dem Rotor verbunden. Durch die Anbringung des Wirbelstromelements am Reibelement können vorteilhaft zusätzliche Verbindungselemente für das Wirbelstromelement eingespart werden.

Besonders bevorzugt ist es, wenn das weitere Kupplungselement ein Ankerscheibenbauteil mit einer Ankerscheibe ist, die mit dem Rotor magnetisch zusammenwirkt und dabei im eingekuppelten Zustand über ein Reibflächenelement mit dem Rotor in Reibkontakt tritt. Dies bietet den Vorteil einer besonders kompakten Bauweise, weil die Ankerscheibe und das Wirbelstromelement mittels gemeinsamer Bauelemente drehbar zum Rotor und zur Kupplungsdrehachse beispielsweise auf einer Drehwelle gelagert sind.

Eine weitere zweckmäßige Ausführung der Erfindung besteht darin, dass ein Ankerscheibenbauteil eine Ankerscheibe, einen Flansch und ein Federelement umfassen, wobei der Flansch und das Federelement einstückig sind. Hierdurch wird die Zahl einzelner Bauteile, aus denen sich die Kupplung zusammensetzt, und die entsprechende Zahl der Herstellungsschritte vorteilhaft verringert.

Darüber hinaus ist es vorteilhaft, dass ein Ankerscheibenbauteil eine Ankerscheibe, ein Federelement und einen Flansch umfasst, wobei die Ankerscheibe, das Federelement und der Flansch einstückig sind. Hierbei wird ein weiteres einzelnes Bauteil eingespart.

Eine besonders bevorzugte Ausführung der Erfindung sieht vor, dass das weitere Kupplungselement und das Wirbelstromelement als einstückiges Bauteil ausgebildet sind. Als weiteres Kupplungselement kann zum Beispiel eine Reibscheibe oder ein Ankerscheibenbauteil mit dem Wirbelstromelement zu einem einstückigen Bauteil kombiniert werden. Diese Maßnahme bietet ebenfalls den Vorteil, die Anzahl der Einzelteile einer Kupplung zu verringern.

Eine weitere bevorzugte Ausbildung der Erfindung sieht vor, dass am Wirbelstromelement konzentrisch ein Ring aus magnetisch leitendem Material so angebracht ist, dass der Ring in radialer Richtung zumindest teilweise vom Wirbelstromelement umgeben ist. Der magnetisch leitende Ring dient dazu, den magnetischen Fluss, der von Magnetelementen ausgeht, so zu führen, dass Wirbelströme wirkungsvoller erzeugt werden. Dadurch können mit dem Wirbelstromantrieb stärkere Drehmomente und höhere Drehzahlen übertragen werden.

### Ausführungsbeispiele:

Anhand von vier Ausführungsbeispielen, die in den Zeichnungen dargestellt sind, werden weitere Vorteile und Einzelheiten der Erfindung dargelegt. Dabei werden in allen Figuren einheitlich für Teile gleicher Funktion die gleichen Bezugszeichen verwendet.

Es zeigen:
- Figur 1: perspektivische Ansicht einer schematischen Schnittdarstellung einer erfindungsgemäßen Reibschaltkupplung,
- Figur 2: schematische Schnittdarstellung einer elektromagnetischen Reibschaltkupplung mit separatem Wirbelstromelement,
- Figur 3a: perspektivische Darstellung eines einstückigen Bauteils zur Kombination von Ankerscheibe, Federelement und Flansch,
- Figur 3b: schematische Schnittdarstellung einer elektromagnetischen Reibschaltkupplung mit einstückiger Kombination von Ankerscheibe, Federelement und Flansch,
- Figur 4: schematische Schnittdarstellung durch eine elektromagnetische Reibschaltkupplung mit einstückiger Kombination aus Wirbelstromelement, Ankerscheibe, Federelement und Flansch.

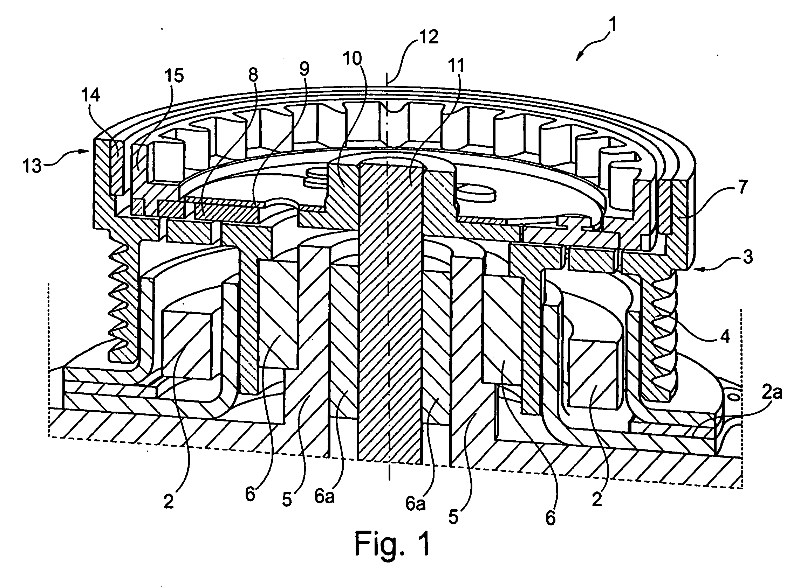

Die Figur 1 zeigt eine elektromagnetische Reibschaltkupplung 1, mit der beispielsweise eine nicht gezeigte Kühlwasserpumpe eines Verbrennungsmotors schaltbar angetrieben werden kann. Der innere Aufbau der Kupplung ist anhand eines Schnitts entlang einer Kupplungsdrehachse 12 schematisch dargestellt. Konzentrisch zur Kupplungsdrehachse 12 sind ein Lagerstutzen 5, z. B. eines Pumpengehäuses, und ein Elektromagnet 2 feststehend angeordnet. Über ein Kugellager 6 ist ein Rotor 3 um die Kupplungsdrehachse 12 drehbar mit dem Lagerstutzen 5 verbunden. Mit dem am Rotor 3 ausgebildeten Antriebselement 4, einem Treibrad mit Führungsrillen für Riemenantrieb, ist der Rotor 3 als Antriebsseite der Kupplung 1 vorgesehen.

Innerhalb des Lagerstutzens 5 ist ein weiteres Kugellager 6a angeordnet. Das innere Kugellager 6a hält eine Drehwelle 11 in einer um die Kupplungsdrehachse 12 drehbaren Lage. Die Drehwelle 11 ist Teil der Abtriebseite der Kupplung 1.

Eine Ankerscheibe 8 ist über ein federndes Element 9 und einen Flansch 10 drehfest mit der Drehwelle 11 verbunden. Durch Permanentmagnete 2a wird die Ankerscheibe 8 gegen den Rotor 3 gezogen, sodass zwischen der Ankerscheibe 8 und dem Rotor 3 ein Reibschluss auftritt. Sobald die Windungen des Elektromagneten 2 von elektrischem Strom hinreichender Stärke durchflossen werden und ein magnetisches Feld der Permanentmagnete neutralisiert wird, wird der Reibschluss zwischen der Ankerscheibe 8 und dem Rotor 3 aufgehoben. Damit ist die Kupplung in einen stromlosen Zustand geschaltet. Im ausgekuppelten, bestromten Zustand wirkt, wie nachfolgend beschrieben, eine Wirbelstromkupplung.

In axialer Richtung schließt sich an das Antriebselements 4 eine rohrförmige Verlängerung 7 des Rotors 3 mit etwas größerem Radius an. Die rohrförmige Verlängerung 7 reicht in axiale Richtung so weit, dass sie sowohl die Ankerscheibe 8 als auch ein Wirbelstromelement 15 vollständig umschließt. Der Rotor 3, das Antriebselement 4 und die rohrförmige axiale Verlängerung 7 bilden z. B. ein einstückiges Bauteil aus einem magnetisch leitfähigen Metall.

An der Innenseite dieser rohrförmigen Verlängerung 7 sind Magnetelemente 14 angebracht. Es kann sich um ein einzelnes Magnetelement handeln, das in mehrere unterschiedlich magnetisierte Segmente entlang seines Umfangs unterteilt ist. Dabei ist z. B. die Magnetisierung benachbarter Segmente jeweils entgegengesetzt gerichtet. Ebenso können mehrere Einzelmagnete verwendet werden, die entlang des Umfangs an der Innenseite der rohrförmigen Verlängerung 7 so angebracht werden, dass abwechselnd magnetische Nord- und Südpole zur Mantelfläche des Wirbelstromelements gerichtet sind. In beiden Fällen genügt es, den Magnetring bzw. die Magnete an der Innenseite der rohrförmigen Verlängerung 7 anzukleben.

Im ausgekuppelten, bestromten Zustand der Kupplung 1, das heißt wenn die Ankerscheibe und der Rotor nicht mehr in Reibkontakt miteinander stehen, können sich die Magnetelemente 14 und das Wirbelstromelement 15 relativ zueinander drehen. Dabei induzieren die Magnetelemente 14 Wirbelströme im Wirbelstromelement 15, sodass durch elektromagnetische Wechselwirkung zwischen den Magnetelementen 14 und dem Wirbelstromelement 15 ein Drehmoment auf die Drehwelle 11 übertragen wird. Dabei unterstützen z. B. die magnetischen Materialeigenschaften des Rotors auch die Wirbelstromkupplung 13, indem die rohrförmige Verlängerung 7 eine Bündelung des magnetischen Flusses im magnetisch leitenden Material bewirkt.

Das Wirbelstromelement 15 ist an der Ankerscheibe 8 angebracht. In dieser Ausführung ist es besonders vorteilhaft, das Wirbelstromelement 15 aus einem leichten Metall mit hoher elektrischer Leitfähigkeit, wie z. B. Aluminium, herzustellen. Die hohe elektrische Leitfähigkeit fördert die Übertragung höherer Drehmomente und Drehzahlen. Je leichter das Wirbelstromelement 15 ist, umso geringer fallen die Trägheitskräfte an der Ankerscheibe 8 aus. Dies bietet den Vorteil, dass die Ankerscheibe schneller einkuppeln kann und somit die Dauer bis zum drehfesten Reibkontakt mit dem Rotor im Wesentlichen durch die mechanische Leistungsabnahme an der Drehwelle 11 bestimmt wird. Weil die Kupplung dazu ausgelegt ist, ohne Reibkontakt zwischen Ankerscheibe und Rotor nur ein vergleichsweise geringes Drehmoment zu übertragen, kann auf einen magnetischen Rückschlussring am Wirbelstromelement 15 verzichtet werden.

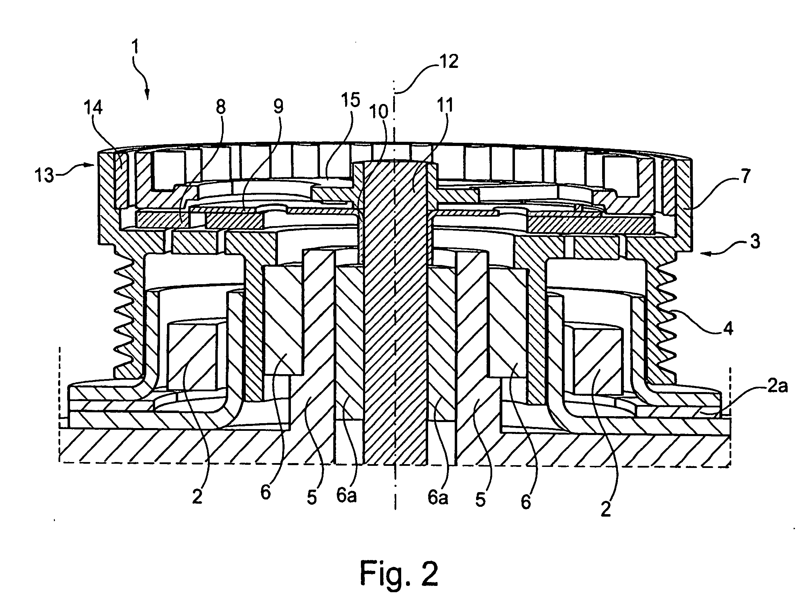

Einige wesentliche Merkmale der vorangehend beschriebenen Ausführung einer erfindungsgemäßen Kupplung treffen auch für die in Figur 2, Figur 3b und Figur 4 dargestellten Ausführungsbeispiele zu. Insbesondere ist in allen folgenden Ausführungsbeispielen ein Rotor 3 vorhanden, mit dem die rohrförmige axiale Verlängerung 7 und das Antriebselement 4 einstückig ausgebildet sind und der die Antriebsseite der Kupplung bildet. Ebenso sind in allen folgenden Ausführungsbeispielen der Rotor 3 und die Drehwelle 7 in übereinstimmender Weise über Kugellager 6, 6a drehbar zum feststehenden Lagerstutzen 5 an letztere angebracht. Daher gehen die Beschreibungen der nachfolgenden Ausführungsbeispiele vor allem auf deren abweichende Merkmale ein.

In Figur 2 ist eine Ausführung einer erfindungsgemäßen Reibschaltkupplung dargestellt, bei der das Wirbelstromelement 15 über die Drehwelle 11 mit der Ankerscheibe 8 verbunden ist. Somit verbleibt das Wirbelstromelement 15 auch im eingekuppelten Zustand der Kupplung 1 an seiner axialen Position, während sich die Ankerscheibe 8 axial zwischen den den Kupplungszuständen entsprechenden Positionen bewegen kann. Die starre Verbindung mit der Drehachse 11 erlaubt dem Wirbelstromelement nur noch sehr kleine Lageabweichungen senkrecht zur Kupplungsdrehachse im Vergleich mit der in Figur 1 gezeigten Ausführung. Daher können in dieser Ausführung die Polflächen der Magnetelemente 14 in geringerem Abstand zur Mantelfläche des Wirbelstromelements angeordnet werden, wodurch sich der Wirkungsgrad des Wirbelstromantriebs erhöhen lässt.

In dem in Figur 2 gezeigten Ausführungsbeispiel bilden der Flansch 10 und das Federelement 9 ein einstückiges Bauteil, das die Ankerscheibe drehfest und axial beweglich mit der Drehwelle 11 verbindet. Zur Befestigung wird die Drehwelle 11 in den Flansch 10 eingestemmt.

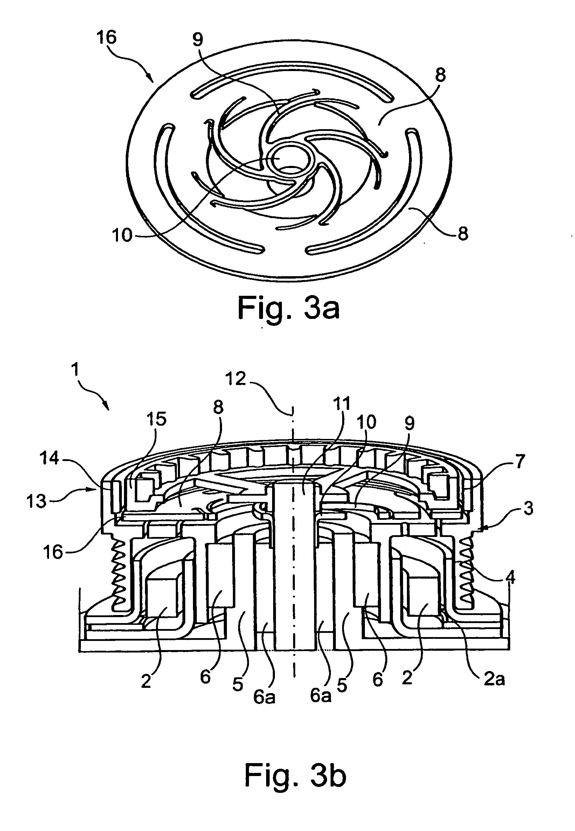

Die Figur 3a zeigt ein einstückiges Ankerscheibenbauteil 16, das die Funktionen der Ankerscheibe 8, der Federelemente 9 und des Flansches 10 in sich vereint. Das Bauteil besteht aus magnetisch leitfähigem Material, dessen Dicke im Wesentlichen von den Anforderungen an die Funktion als Ankerscheibe bestimmt werden.

Die Figur 3b zeigt eine entsprechende Kupplungsanordnung 1, die das in Figur 3a gezeigte Ankerscheibenbauteil 16 verwendet.

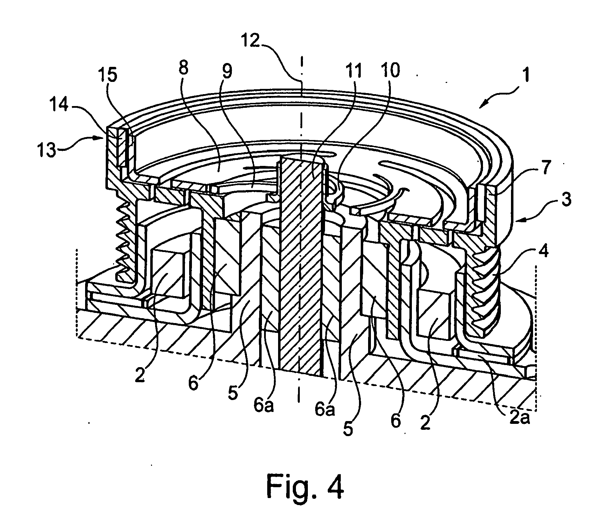

Die in Figur 4 gezeigte Ausführung der erfindungsgemäßen Kupplung 1 führt die Verringerung der Einzelteile weiter, indem an der Drehwelle 11 nur noch ein einstückiges Bauteil befestigt wird, das die Funktionen des Wirbelstromelements 15, der Ankerscheibe 8, des Federelements 9 und des Flansches 10 in einem einzigen Bauteil zusammenfasst.

### Bezugszeichenliste:

- 1: elektromagnetische Reibschaltkupplung
- 2: Elektromagnet
- 2a: Dauermagnet
- 3: Rotor
- 4: Antriebselement
- 5: Lagerstutzen
- 6: Wälzlager
- 6a: Wälzlager
- 7: axiale Verlängerung
- 8: Ankerscheibe
- 9: Federelement
- 10: Flansch
- 11: Abtriebsdrehwelle
- 12: Drehachse
- 13: Wirbelstromkupplung
- 14: Magnet
- 15: Wirbelstromelement
- 16: Ankerscheibenbauteil

## Patentansprüche

1. Elektromagnetische Reibschaltkupplung (1), umfassend einen Rotor (3), ein weiteres Kupplungselement (8), das eine mit dem Rotor (3) gemeinsame Drehachse (12) umläuft und bezüglich des Rotors (3) drehbar gelagert ist, sowie Elemente (14,15) zur Übertragung einer Drehbewegung nach dem Prinzip einer Wirbelstromkupplung (13), **dadurch gekennzeichnet, dass** mit dem Rotor (3) ein oder mehrere Magnetelemente (14) drehfest verbunden sind, die ein mit dem weiteren Kupplungselement (8) drehfest verbundenes Wirbelstromelement (15) umlaufen.

2. Elektromagnetische Reibschaltkupplung (1) gemäß Anspruch 1, **dadurch gekennzeichnet, dass** die Magnetelemente (14) der Wirbelstromkupplung (13) an einer oder mehreren axialen Verlängerungen (7) des Rotors (3) angebracht sind.

3. Elektromagnetische Reibschaltkupplung (1) gemäß Anspruch 2, **dadurch gekennzeichnet, dass** die axiale Verlängerung (7) des Rotors (3) konzentrisch zur Kupplungsdrehachse (12) rohrförmig ausgebildet ist.

4. Elektromagnetische Reibschaltkupplung (1) nach einem der vorangehenden Ansprüche, **dadurch gekennzeichnet, dass** die Magnetelemente (14) der Wirbelstromkupplung (13) an einem Antriebselement (4), das konzentrisch zur Kupplungsdrehachse (12) am Rotor (3) befestigt ist, angebracht sind.

5. Elektromagnetische Reibschaltkupplung (1) nach einem der vorhergehenden Ansprüche, **dadurch gekennzeichnet, dass** der Rotor (3), eine axiale Verlängerung (7) des Rotors (3), an dem die Magnetelemente (14) angebracht sind, und ein Antriebselement (4) ein einstückiges Bauteil bilden.

6. Elektromagnetische Reibschaltkupplung (1) nach einem der vorhergehenden Ansprüche, **dadurch gekennzeichnet, dass** das Wirbelstromelement (15) einstückig ausgebildet ist.

7. Elektromagnetische Reibschaltkupplung (1) nach einem der vorhergehenden Ansprüche, **dadurch gekennzeichnet, dass** das Wirbelstromelement (14) ein separates Bauteil zur Anbringung an einer gemeinsamen Drehwelle (11) mit dem weiteren Kupplungselement (8) ist.

8. Elektromagnetische Reibschaltkupplung (1) nach einem der vorhergehenden Ansprüche, **dadurch gekennzeichnet, dass** das Wirbelstromelement (15) an dem weiteren Kupplungselement (8) befestigt ist.

9. Elektromagnetische Reibschaltkupplung (1) nach einem der vorhergehenden Ansprüche, **dadurch gekennzeichnet, dass** das weitere Kupplungselement (8) ein Reibflächenelement ist.

10. Elektromagnetische Reibschaltkupplung (1) nach einem der vorhergehenden Ansprüche, **dadurch gekennzeichnet, dass** das weitere Kupplungselement ein Ankerscheibenbauteil (16) mit einer Ankerscheibe (8) ist, die mit dem Rotor magnetisch zusammenwirkt.

11. Elektromagnetische Reibschaltkupplung (1) nach einem der vorhergehenden Ansprüche , **dadurch gekennzeichnet, dass** ein Ankerscheibenbauteil (16) eine Ankerscheibe (8), einen Flansch (10) und ein Federelement (9) umfassen, wobei der Flansch (10) und das Federelement (9) einstückig sind.

12. Elektromagnetische Reibschaltkupplung (1) nach einem der vorangehenden Ansprüche, **dadurch gekennzeichnet, dass** ein Ankerscheibenbauteil (16) eine Ankerscheibe (8), einen Flansch (10) und ein Federelement (9) umfassen, wobei die Ankerscheibe (8), der Flansch (10) und das Federelement (9) einstückig sind.

13. Elektromagnetische Reibschaltkupplung (1) nach einem der vorangehenden Ansprüche, **dadurch gekennzeichnet, dass** das weitere Kupplungselement (8,16) und das Wirbelstromelement (15) als einstückiges Bauteil ausgebildet sind.

14. Elektromagnetische Reibschaltkupplung (1) nach einem der vorgenannten Ansprüche, **dadurch gekennzeichnet, dass** am Wirbelstromelement (15) konzentrisch ein Ring aus magnetisch leitendem Material derart angebracht ist, dass der Ring in radialer Richtung zumindest teilweise vom Wirbelstromelement (15) umgeben ist.

## Claims

1. Electromagnetic friction clutch (1), comprising a rotor (3), a further clutch element (8), which orbits a common axis of rotation (12) with the rotor (3) and is supported so that it can rotate relative to the rotor (3), and elements (14, 15) for transmitting a rotational movement on the principle of an eddy current clutch (13), **characterised in that** one or more magnet elements (14) are non-rotatably fixed to the rotor (3), said magnet elements orbiting an eddy current element (15) connected in a non-rotational manner to the further coupling element (8).

2. Electromagnetic friction clutch (1) according to claim 1, **characterised in that** the magnetic elements (14) of the eddy current clutch (13) are fitted to one or more axial extensions (7) of the rotor (3).

3. Electromagnetic friction clutch (1) according to claim 2, **characterised in that** the axial extension (7) of the rotor (3) is tubular and concentric to the clutch axis of rotation (12).

4. Electromagnetic friction clutch (1) according one of the preceding claims, **characterised in that** the magnet elements (14) of the eddy current clutch (13) are fitted to a drive element (4), which is fixed to the rotor (3) concentrically to the clutch axis of rotation (12).

5. Electromagnetic friction clutch (1) according to one of the preceding claims, **characterised in that** the rotor (3), an axial extension (7) of the rotor (3) to which the magnet elements (14) are fitted, and a drive element (4) form a one-piece component.

6. Electromagnetic friction clutch (1) according to one of the preceding claims, **characterised in that** the eddy current element (15) is formed in one piece.

7. Electromagnetic friction clutch (1) according to one of the preceding claims, **characterised in that** the eddy current element (14) is a separate component for fitting to a common rotary shaft (11) with the further clutch element (8).

8. Electromagnetic friction clutch (1) according to one of the preceding claims, **characterised in that** the eddy current element (15) is fixed to the further clutch element (8).

9. Electromagnetic friction clutch (1) according to one of the preceding claims, **characterised in that** the further clutch element (8) is a friction surface element.

10. Electromagnetic friction clutch (1) according to one of the preceding claims, **characterised in that** the further clutch element is an armature disk component (16) comprising an armature disk (8), which interacts magnetically with the rotor.

11. Electromagnetic friction clutch (1) according to one of the preceding claims, **characterised in that** it comprise an armature disk component (16), an armature disk (8), a flange (10) and a spring element (9), with the flange (10) and the spring element (9) being formed in one piece.

12. Electromagnetic friction clutch (1) according to one of the preceding claims, **characterised in that** it comprises an armature disk component (16), an armature disk (8), a flange (10) and a spring element (9), with the armature disk (8), the flange (10) and the spring element (9) being formed in one piece.

13. Electromagnetic friction clutch according to one of the preceding claims, **characterised in that** the further clutch element (8, 16) and the eddy current element (15) are formed as a one-piece component.

14. Electromagnetic friction clutch (1) according to one of the preceding claims, **characterised in that** a ring made of magnetically conductive material is fixed concentrically to the eddy current element (15) in such a way that the ring in radial direction is at least partially surrounded by said eddy current element (15).

## Revendications

1. Embrayage à friction électromagnétique (1) comportant un rotor (3) un second élément d'embrayage (8) qui tourne autour d'un axe de rotation (12) commun avec le rotor (3) et est logé mobile en rotation par rapport à ce rotor (3) ainsi que des éléments (14, 15) permettant la transmission d'un mouvement de rotation selon le principe d'un embrayage a courant de Foucault (13),
**caractérisé en ce qu'**
un ou plusieurs élément(s) magnétique(s) (14) est (sont) relié(s) solidairement en rotation au rotor (3) et entoure(nt) un élément à courant de Foucault (15) relié solidairement en rotation au second élément d'embrayage (8).

2. Embrayage à friction électromagnétique (1) conforme à la revendication 1,
**caractérisé en ce que**
les éléments magnétiques (14) de l'embrayage à courant de Foucault (13) sont montés sur au moins un prolongement axial (7) du rotor (3).

3. Embrayage à friction électromagnétique (1) conforme à la revendication 2,
**caractérisé en ce que**
le prolongement axial (7) du rotor (3) est réalisé sous la forme d'un tube concentrique à l'axe de rotation (12) de l'embrayage.

4. Embrayage à friction électromagnétique (1) conforme à l'une des revendications précédentes,
**caractérisé en ce que**
les éléments magnétiques (14) de l'embrayage à courant de Foucault (13) sont fixés à un élément d'entrainement (4) monté sur le rotor (3) concentriquement à l'axe de rotation (12) de l'embrayage.

5. Embrayage à friction électromagnétique (1) conforme à l'une des revendications précédentes,
**caractérisé en ce que**
le rotor (3), un prolongement axial (7) de ce rotor (3) sur lequel sont montés les éléments magnétiques (14) et un élément d'entrainement (4) forment un composant en une seule pièce.

6. Embrayage à friction électromagnétique (1) conforme à l'une des revendications précédentes,
**caractérisé en ce que**
l'élément à courant de Foucault (15) est réalisé en une seule pièce.

7. Embrayage à friction électromagnétique (1) conforme à l'une des revendications précédentes,
**caractérisé en ce que**
l'élément à courant de Foucault (14) est un composant séparé destiné à être monté sur un arbre rotatif commun (11) avec les autres éléments d'embrayage (8).

8. Embrayage à friction électromagnétique (1) conforme à l'une des revendications précédentes,
**caractérisé en ce que**
l'élément à courant de Foucault (15) est monté sur le second élément d'embrayage (8).

9. Embrayage à friction électromagnétique (1) conforme à l'une des revendications précédentes,
**caractérisé en ce que**
le second élément d'embrayage (8) est un élément à surface de friction.

10. Embrayage à friction électromagnétique (1) conforme à l'une des revendications précédentes,
**caractérisé en ce que**
le second élément d'embrayage est un composant à disque d'induit (16) comportant un disque d'induit (8) qui coopère magnétiquement avec le rotor.

11. Embrayage à friction électromagnétique (1) conforme à l'une des revendications précédentes,
**caractérisé en ce qu'**
un composant à disque d'induit (16) comporte un disque d'induit (8), une bride (10) et un élément élastique (9), la bride (10) et l'élément élastique (9) étant réalisés en une seule pièce.

12. Embrayage à friction électromagnétique (1) conforme à l'une des revendications précédentes,
**caractérisé en ce qu'**
un composant à disque d'induit (16) comporte un disque d'induit (8), une bride (10) et un élément élastique (9), le disque d'induit (8), la bride (10) et l'élément élastique (9) étant réalisés en une seule pièce.

13. Embrayage à friction électromagnétique (1) conforme à l'une des revendications précédentes,
**caractérisé en ce que**
le second élément d'embrayage (8, 16) et l'élément à courant de Foucault (15) sont réalisés sous la forme d'un composant en une seule pièce.

14. Embrayage à friction électromagnétique (1) conforme à l'une des revendications précédentes,
**caractérisé en ce que**
sur l'élément à courant de Foucault (15), et concentriquement à celui-ci est montée une bague en un matériau magnétiquement conducteur de sorte que cette bague soit au moins partiellement entourée par l'élément à courant de Foucault (15) en direction radiale.
